# EUROPÄISCHE PATENTSCHRIFT

(11) **EP 1 578 630 B1**
(45) Veröffentlichungstag und Bekanntmachung des Hinweises auf die Patenterteilung: **31.05.2006**
(21) Anmeldenummer: 03813530.7
(22) Anmeldetag: 12.12.2003
(51) Int. Cl.: B60J 7/12, B60J 7/10

(54) **CABRIOLET-FAHRZEUG MIT EINEM BEWEGLICHEN DACH**
CONVERTIBLE VEHICLE HAVING A MOVING ROOF
VEHICULE DE TYPE CABRIOLET A TOIT MOBILE

(30) Priorität: 20.12.2002 DE 10259865
(43) Veröffentlichungstag der Anmeldung: 28.09.2005
(73) Patentinhaber: Wilhelm Karmann GmbH, 49084 Osnabrück (DE)
(72) Erfinder: RUSSKE, Klaus, 49143 Bissendorf (DE); THIEDE, Ralf, 49497 Mettingen (DE)
(74) Vertreter: Ouzman, Beverley Nicola Claire
(86) Internationale Anmeldenummer: PCT/DE2003/004108
(87) Internationale Veröffentlichungsnummer: WO 2004/056595

(56) Entgegenhaltungen:
- EP-A- 0 713 797
- EP-A- 1 256 474
- WO-A-95/29073
- FR-A- 2 791 007

## Beschreibung

Die Erfindung betrifft ein Cabriolet-Fahrzeug mit einem beweglichen Dach, das zumindest bereichsweise flexibel ausgebildet ist und einen über zumindest bereichsweise starre Träger gespannten Dachbezug aufweist, wobei die Träger jeweils zumindest ein Gelenk aufweisen, an dem ein erstes Trägerteil über eine Gelenkachse schwenkbar mit einem zweiten Trägerteil verbunden ist.

Ein derartiges Cabriolet-Fahrzeug ist aus der DE 101 23 227 bekannt. Obwohl sich die dort beschriebene Bauweise an sich bewährt hat, kann es beim Öffnen und Schließen zu übermäßigen Spannungen im Dachbezug kommen. Außerdem liegen die Oberseiten der Längsträger im Bereich der Schwenkachse direkt aufeinander, was bei gekrümmten Trägern in Bezug auf den Platzbedarf im eingefalteten Zustand nachteilig ist.

Aus der EP-A-1 256 474 ist ebenfalls ein derartiges Cabriolet-Fahrzeug bekannt.

Die WO 95/29073 zeigt ein Schiebedach für Kraftfahrzeuge mit einem Dachdeckel, der durch Führungsschienen abgestützt ist, welche in zwei Längenabschnitte unterteilt sind.

Die Aufgabe der Erfindung besteht darin, ein Cabriolet-Fahrzeug der eingangs genannten Gattung im Hinblick auf die vorstehend beschriebenen Nachteile zu verbessern, sowie darin, das Ablagevolumen des Daches zu verringern und dabei den nutzbaren Stauraum des Fahrzeugs zu vergrößern.

Diese Aufgabe wird erfindungsgemäß durch Anspruch 1 gelöst.

Weitere Ausgestaltungen der Erfindung sind in den Unteransprüchen beschrieben.

Die Erfindung ermöglicht in vorteilhafter Weise das Vermeiden von übermäßigen Spannungen im Verdeckbezug und in den Trägern (Faltgestänge) . Wenn, wie dies vorteilhaft vorgesehen ist, sämtliche kinematischen Bauteile innerhalb der Längsträgerelemente aufgenommen sind, wird ein minimaler Bauraum bzw. Platzbedarf erzielt. Bei Verwendung einer Zugfeder wird eine definierte Lage der Bauteile zueinander erreicht. Wenn besonders vorteilhaft ein Zwischenhebel vorgesehen ist, wird bei verschwenkter Lage eine definierte Endposition mit einem gegenseitigen Abstand der Längsträgerelemente erreicht, so daß ein Zwischenraum zwischen den Trägern gebildet wird, in dem der Verdeckstoff aufnehmbar ist.

Wenn in vorteilhafter Weise die Zugfeder an einem abgewinkelten Bereich des Zwischenhebels angreift, erhält man eine definierte Schwenkreihenfolge um die Gelenkachsen des Zwischenhebels, wodurch der Öffnungs- bzw. Schließvorgang des Dachs vereinfacht und verbessert wird.

Weitere Vorteile und Merkmale der Erfindung ergeben sich aus dem nachfolgend beschriebenen und in der Zeichnung dargestellten Ausführungsbeispiel. In der Zeichnung zeigt:
- Fig. 1a: eine schematische, perspektivische Ansicht eines erfindungsgemäßen Cabriolet-Fahrzeugs bei geschlossenem Dach,
- Fig. 1b: eine Ansicht entspricht Fig. 1 bei teilweise geöffnetem Dach,
- Fig. 2: eine Seitenansicht eines erfindungsgemäßen Gelenks im Bereich eines Trägers des Dachs,
- Fig. 3: eine Ansicht des Gelenks nach Fig. 3 in einem ausgezogenen Zustand,
- Fig. 4: eine Ansicht des Gelenks nach Fig. 2 und 3 in einem ausgezogenen und einfach abgewinkelten Zustand,
- Fig. 5: eine Ansicht des Gelenks nach Fig. 2 bis 4 in einem ausgezogenen und zweifach abgewinkelten Zustand,
- Fig. 6: eine perspektivische Ansicht des Gelenks entsprechend Fig. 5.

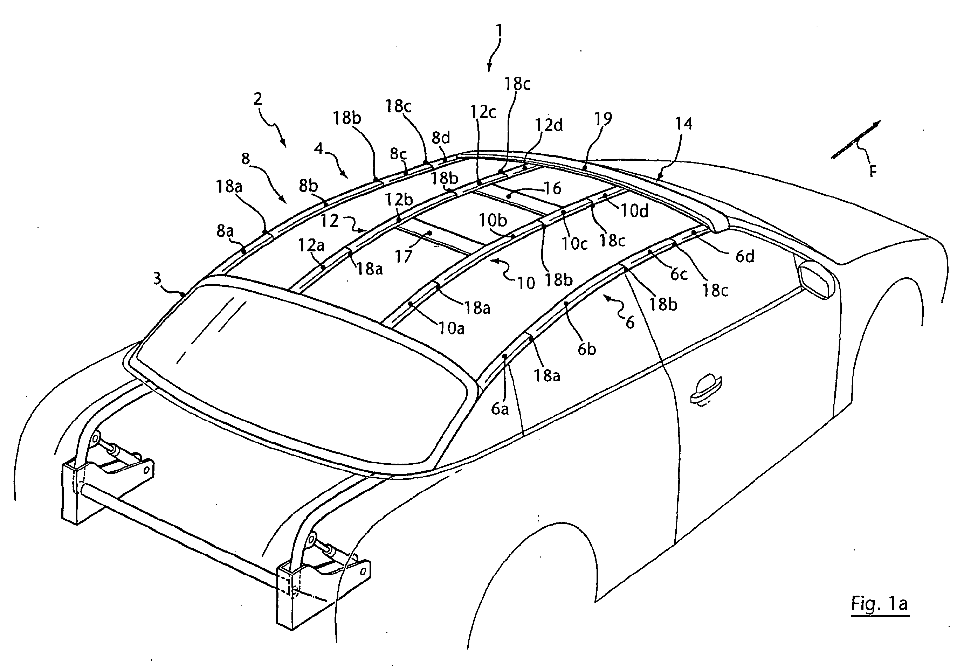

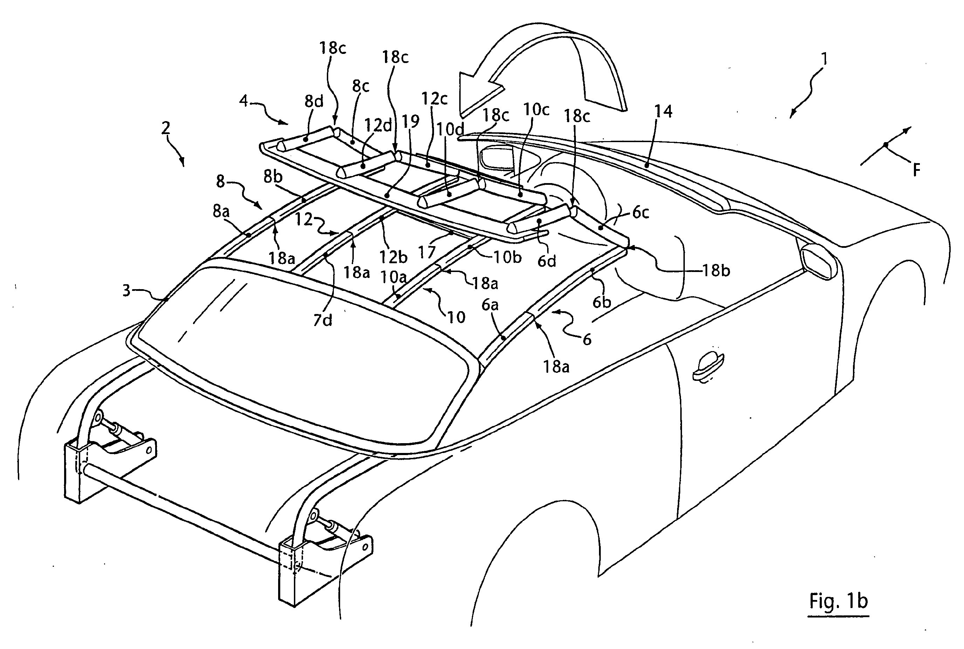

Das in Fig. 1a und 1b schematisch dargestellte Cabriolet-Fahrzeug 1 weist ein insgesamt bewegliches Dach 2 auf, das ein starres hinteres Dachteil 3 und ein daran in Fahrtrichtung F anschließendes flexibles Dachteil 4 umfaßt. Alternativ kann das Dach 2 insgesamt flexibel ausgebildet sein. Ein über das Dach gespannter Dachbezug ist nicht dargestellt.

Das flexible Dachteil 4 weist fahrzeugrandseitige Rahmenabstützungen 6, 8 und Träger 10, 12 auf, wobei zur Vereinfachung der Beschreibung vorliegend die Rahmenabstützungen ebenfalls als Träger bezeichnet sind. Die Träger 6 bis 12 sind im dargestellten Ausführungsbeispiel in Fahrzeuglängsrichtung angeordnet und verbinden das starre Dachteil 3 mit einem oberen Bereich eines vorderen Windschutzscheibenrahmens 14. Anstelle der in Fig. 1a und 1b dargestellten mittleren Träger 10, 12 können eine andere Anzahl und insbesondere auch (zusätzlich oder lediglich) ein mittlerer, in der vertikalen Fahrzeuglängsmittelebene liegender Träger vorgesehen sein. Zusätzlich können quer verlaufende Spriegel (nicht dargestellt) faltbar ausgebildet sein.

Im Ausführungsbeispiel sind Querverbinder 16, 17 zwischen den Trägern 10, 12 vorgesehen. Derartige Querverbinder können auch zwischen den (mittleren) Trägern 10, 12 und (seitlichen) Trägern bzw. Rahmenabstützungen 6, 8 vorgesehen sein. Die Querverbinder verlaufen dicht unterhalb der Oberseite der Träger, so daß sie sich bei geschlossenem Dach nicht im Dachbezug abzeichnen.

Sämtliche Träger 6 bis 12 sind über einen frontseitigen Querträger 19, der zur Anlage an den Windschutzscheibenrahmen 14 dient, miteinander verbunden.

Die längsverlaufenden Träger 6, 8, 10, 12 sind im dargestellten Ausführungsbeispiel jeweils durch drei Gelenke 18a, 18b, 18c in ihrem Längsverlauf in vier Abschnitte 6a, b, c, d; 8a, b, c, d; 10a, b, c, d und 12a, b, c, d unterteilt. Der flexible Dachteil 4 ist um diese Gelenke faltbar, wie in Fig. 1b angedeutet ist.

Die Lage der jeweils einander bezüglich einer Faltungsbewegung zugeordneten Gelenke 18a, 18b, 18c ist so aufeinander abgestimmt, daß die genannten Gelenke jeweils gleichzeitig bewegt werden. Die jeweils nebeneinanderliegenden Gelenke, z.B. 18a, liegen jedoch nicht auf einer gemeinsamen geraden Querlinie, sondern ihre Lage ist durch die Wölbung und den Bewegungsablauf des Öffnens und Schließens des Dachs aufeinander abgestimmt. Dieser Bewegungsablauf ist bspw. aus der DE 101 23 227 bekannt.

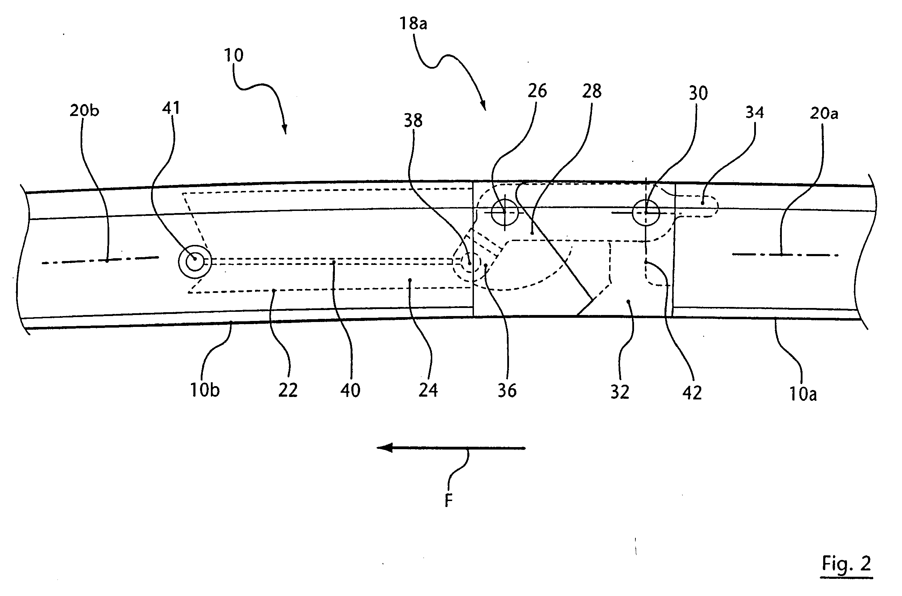

Fig. 2 bis 6 zeigen Aufbau und Funktion der Gelenke 18a, b, c, d, wobei sich die einzelnen Gelenke eines Dachs im Hinblick auf konkrete Einzelabmessungen usw. möglicherweise durchaus voneinander unterscheiden können.

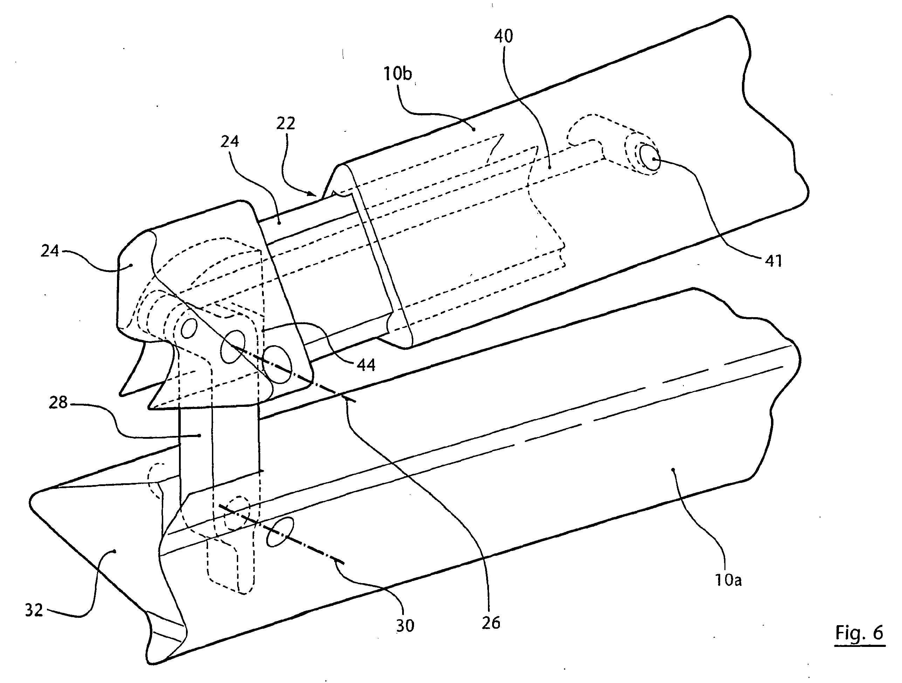

Die Träger 6, 8, 10, 12 können bspw. aus einem Kunststoff, insbesondere aus einem mechanisch hochbelastbaren Kunststoff wie etwa einem Duroplasten, etwa Polyurethan, bestehen. Die Träger sind dabei im wesentlichen gleichartig ausgebildet und umfassen jeweils ein hohles oder massives Profil, bspw. ein Dreiecksprofil (Fig. 6).

Fig. 2 zeigt beispielhaft ein innerhalb des Trägers 10 angeordnetes Gelenk 18a in einer Ausgangsstellung, die einer geschlossenen Stellung des Dachs (Fig. 1a) entspricht und in der die Trägerteile 10a, 10b hinsichtlich ihrer Längsachsen 20a, 20b miteinander fluchten.

Das zweite bzw. in Fahrtrichtung F gesehen vordere Trägerteil 10b weist ein in einer Längsführung 22 in Richtung der Längsachse 20b längsverschieblich aufgenommenes und geführtes (erstes) Gelenkteil 24 auf, an dem über eine Gelenkachse 26 schwenkbeweglich das hintere, erste Trägerteil 10a angelenkt ist. Das erste Trägerteil 10a ist indes in der dargestellten bevorzugten Ausführungsform nicht unmittelbar an der Gelenkachse 26 angelenkt, sondern über einen mit der Gelenkachse 26 verbundenen Zwischenhebel 28, der seinerseits über eine weitere Gelenkachse 30 schwenkbar mit dem ersten Trägerteil 10a verbunden ist. Die Gelenkachsen 26, 30 sind im oberen Bereich des Trägers 10 angeordnet, und die Längsführung 22 ist aufgrund ihrer dreiecksförmigen Querschnittsgestalt (Fig. 6) verdrehsicher ausgeführt.

Die Anbindung des Zwischenhebels 28 an dem ersten bzw. hinteren Trägerteil 10a ist zweckmäßigerweise entsprechend dem (ersten) Gelenkteil 24 über ein von dem Trägerteil 10a separat ausgeführtes zweites bzw. hinteres Gelenkteil 32 ausgebildet, das in das als hohles Trägerprofil ausgebildete Trägerteil 10a eingesteckt und dort durch Schweißen, Klemmen, Schrauben oder Kleben befestigt sein kann, womit der Vorteil verbunden ist, daß der Träger als einfaches gezogenes Rohr ausgeführt werden kann. Alternativ zu der dargestellten Dreiecksform ist selbstverständlich auch jeder andere Profilquerschnitt für den Träger 10 bzw. die anderen Träger denkbar, bspw. ein Rundrohr, Rechteckrohr oder Sonderformen. Zusätzlich könnte vorgesehen sein, daß auch das zweite Gelenkteil 32 nicht starr, sondern entsprechend dem ersten Gelenkteil 24 längsverschieblich in dem Trägerteil 10a aufgenommen ist und unter einer rückstellenden Federspannung steht.

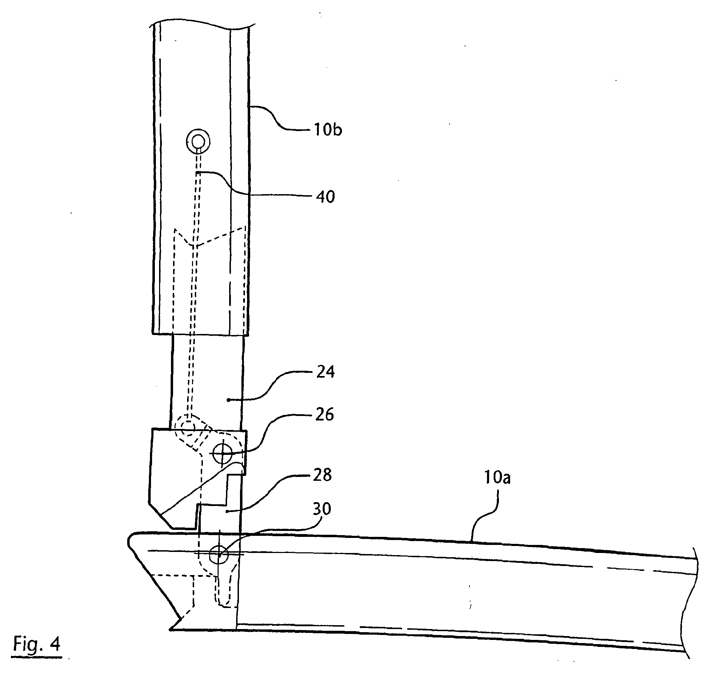

Der Zwischenhebel 28 besitzt auf seiner dem ersten Trägerteil 10a zugewandten Seite eine schmale nasenförmige Verlängerung 34 sowie auf seiner dem ersten Gelenkteil 24 bzw. dem zweiten Trägerteil 10b zugewandten Seite eine abgewinkelte, unter etwa 45° zur Längsrichtung des Zwischenhebels nach unten weisende hebelartige Verlängerung 36, an deren Ende über eine erste Stiftverbindung 38 eine Zugfeder 40 (oder ein Zugband) angebracht ist. Die Zugfeder 40 ist mit einer zweiten Stift- bzw. Bolzenverbindung 41 am vorderen Trägerteil 10b befestigt. Durch die abgewinkelte Verlängerung 36 der Anbindung der Zugfeder 40 wird sichergestellt, daß die Zugfederanordnung etwa in der Mitte des Trägers in einem entsprechenden Hohlraum ohne Berührung von Kanten oder dergleichen verläuft, und daß stets unabhängig von der Schwenkstellung der Bauteile eine Zugspannung (Zugkraft) zwischen dem ersten Gelenkteil 24 und dem zweiten Trägerteil 10b wirkt. Diese Zugkraft hat einerseits eine Rückstellwirkung auf das erste Gelenkteil 24 in Richtung auf die vollständig innerhalb des zweiten Trägerteils 10b eingeschobene Stellung (Fig. 2) und außerdem eine Rückstellwirkung auf den Zwischenhebel 28 in Richtung auf dessen mit dem ersten Gelenkteil 24 ausgerichtete Stellung (Fig. 2, 4).

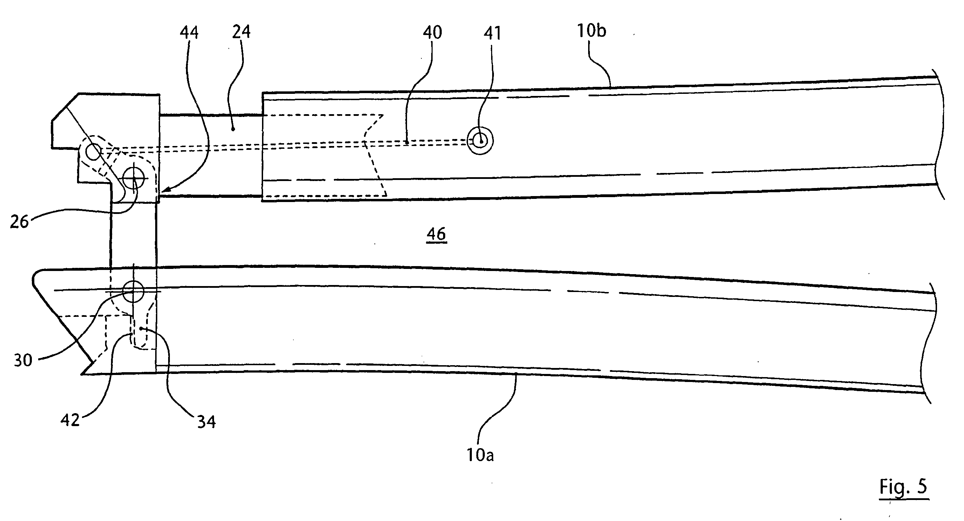

Bei Verschwenken des vorderen Trägerteils 10b gegenüber dem Zwischenhebel 28 (Fig. 4/Fig. 5) im Öffnungssinn des Verdecks vergrößert sich der Abstand der Anbindungspunkte der Zugfeder, so daß sich die Federkraft vergrößert und einer weiteren Öffnungsbewegung entgegenwirkt. Zudem wird durch die verstärkte Zugkraft bei verschwenktem vorderen Trägerteil 10b die Schließbewegung des Verdecks (Verschwenken des vorderen Trägerteils 10b in Richtung einer fluchtenden Lage zum hinteren Trägerteil 10a entsprechend Fig. 2) unterstützt.

In Bezug auf die Form der Längsführung 22 des Gelenkteils 24 sei zusätzlich auf die DE 101 23 227.6 der Anmelderin verwiesen. Entsprechendes gilt für die Form und Funktion der zueinander weisenden, formschlüssig zusammenwirkenden Endabschnitte der Gelenkteile 24, 32, durch die auch Kräfte in Querrichtung aufnehmbar sind.

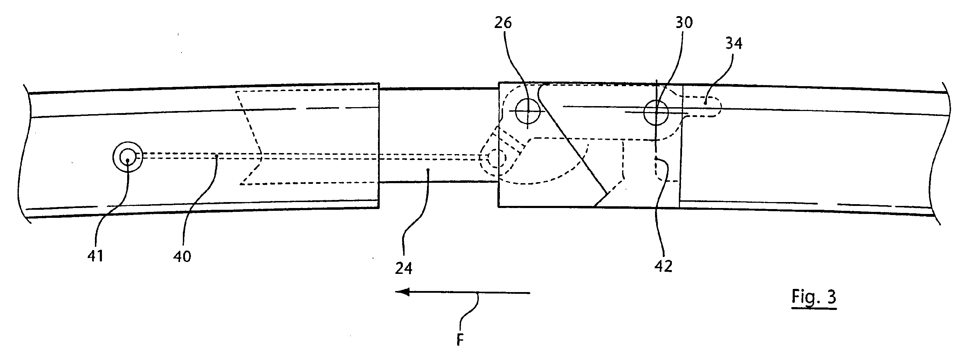

Je nach Anbindung des Verdeckbezugs an den Trägern und der Versetzung (horizontal und/oder vertikal) der Schwenkachsen von benachbart angeordneten Längsträgern 6, 8, 10, 12 besteht für das jeweils vordere Trägerteil einer Gelenkverbindung, z.B. 10b, vor und während der Schwenkbewegung die Möglichkeit, sich gegenüber dem (ersten bzw. vorderen) Gelenkteil, z.B. 24, zu verschieben, wie Fig. 3 zeigt. Hierdurch werden übermäßige Spannungen sowohl im Verdeckbezug als auch im Faltgestänge während der Schwenkbewegung wirkungsvoll vermieden.

In einer ersten Schwenkbewegung bei Anheben des vorderen Trägerteils 10b findet zunächst eine Schwenkbewegung um die weitere Gelenkachse 30 des Zwischenhebels 28 mit dem hinteren Trägerteil 10a statt (Fig. 4). Eine Drehbewegung um die Gelenkachse 26 des Zwischenhebels 28 mit dem vorderen Trägerteil 10b bzw. dem (ersten) Gelenkteil 24 wird aufgrund der Zugkraft der Zugfeder in Verbindung mit der vorstehend beschriebenen Anordnung der Anbindungspunkte der Zugfeder vermieden. Die erste Schwenkbewegung wird solange fortgesetzt, bis die nasenförmige Verlängerung 34 des Zwischenhebels 28 an einen Anschlag 42 innerhalb des hinteren Trägerteils 10a gelangt. In dieser Position (Fig. 4) steht der Zwischenhebel 28 in etwa senkrecht zum hinteren Trägerteil 10a. Im weiteren Verlauf der Schwenkbewegung des Daches schwenkt das vordere Trägerteil 10b um die Gelenkachse 30 mit dem Zwischenhebel entgegen der Zugkraft der Zugfeder 40, während sich deren Länge (Abstand der Anbindungspunkte 38, 41) vergrößert. Diese Schwenkbewegung wird solange fortgesetzt (Fig. 5), bis eine Anschlagfläche 44 einer Aussparung für den Zwischenhebel 28 im vorderen Trägerteil 10b bzw. in dem Gelenkteil 24 an den Zwischenhebel 28 anschlägt (Fig. 5, 6). Der vordere und hintere Trägerteil liegen nun in etwa parallel in einem definierten Abstand voneinander. In einem dazwischen gebildeten Zwischenraum 46 kann der eingefaltete Verdeckbezug aufgenommen werden.

### Bezugszeichenliste

- 1: Fahrzeug
- 2: Dach
- 3: starres Dachteil
- 4: flexibles Dachteil
- 6, 8: Träger (Rahmenabstützung)
- 6a, b, c, d: Trägerteile
- 8a, b, c, d: Trägerteile
- 10, 12: Träger
- 10a, b, c, d: Trägerteile
- 12a, b, c, d: Trägerteile
- 14: Windschutzscheibenrahmen
- 16, 17: Querverbinder
- 18a, b, c: Gelenke
- 19: Querträger
- 20a, 20b: Längsachse
- 22: Längsführung
- 24: erstes (vorderes) Gelenkteil
- 26: Gelenkachse
- 28: Zwischenhebel
- 30: weitere Gelenkachse
- 32: zweites (hinteres) Gelenkteil
- 34: nasenförmige Verlängerung
- 36: hebelartige Verlängerung (an 28)
- 38: erste Stiftverbindung (an 28)
- 40: Zugfeder
- 41: zweite Stiftverbindung (an 10b)
- 42: Anschlag (an 10a)
- 44: Anschlagfläche (in 10b)
- 46: Zwischenraum
- F: Fahrtrichtung

## Patentansprüche

1. Cabriolet-Fahrzeug mit einem beweglichen Dach (4), das zumindest bereichsweise flexibel ausgebildet ist und einen über zumindest bereichsweise starre Träger (6, 8, 10, 12) gespannten Dachbezug aufweist, wobei die Träger (6, 8, 10, 12) jeweils zumindest ein Gelenk (18a, b, c) aufweisen, an dem ein erstes Trägerteil (10a) über eine Gelenkachse (26) schwenkbar mit einem zweiten Trägerteil (10b) verbunden ist, **dadurch gekennzeichnet, daß** zumindest ein Gelenk (18a) ein die Gelenkachse (26) tragendes Gelenkteil (24) aufweist, das schiebebeweglich in einem Trägerteil (10b) aufgenommen ist, wobei an der Gelenkachse (26) ein Zwischenhebel (28) angelenkt ist, der über eine weitere Gelenkachse (30) schwenkbar mit dem ersten Trägerteil (10a) verbunden ist und der an seinem der ersten Gelenkachse (26) benachbarten Endabschnitt eine abgewinkelte Verlängerung (36) aufweist, an der eine das Gelenkteil (24) in eine Ausgangsstellung in dem zweiten Trägerteil (10b) vorspannende Rückstellfeder (40) befestigt ist.

2. Cabriolet-Fahrzeug nach Anspruch 1, **dadurch gekennzeichnet, daß** das Gelenkteil (24) entlang einer Längsachse (20b) des zweiten Trägerteils (10b) schiebebeweglich ist.

3. Cabriolet-Fahrzeug nach Anspruch 1, **dadurch gekennzeichnet, daß** das (erste) Gelenkteil (24) unter einem Winkel zu einer Längsachse (20b) des zweiten Trägerteils (10b) schiebebeweglich ist, wobei sich ein Abstand zwischen der Gelenkachse (26) und der Längsachse (20b) des zweiten Trägerteils (10b) bei Verlagerung des Gelenkteils (24) verändert.

4. Cabriolet-Fahrzeug nach Anspruch 1, **dadurch gekennzeichnet, daß** das (erste) Gelenkteil (24) entlang einer vorbestimmten Bewegungsbahn in dem zweiten Trägerteil (10b) verlagerbar ist, wobei sich ein Abstand zwischen der Gelenkachse (26) und einer Längsachse (20b) des zweiten Trägerteils (10b) bei Verlagerung des Gelenkteils (24) in vorbestimmter Weise ändert.

5. Cabriolet-Fahrzeug nach einem der Ansprüche 1 bis 4, **dadurch gekennzeichnet, daß** der Zwischenhebel (28) bei fluchtender Erstreckung des ersten (10a) und zweiten Trägerteils (10b) innerhalb einer Kontur der Trägerteile (10a, 10b) angeordnet ist.

6. Cabriolet-Fahrzeug nach einem der vorangehenden Ansprüche, **dadurch gekennzeichnet, daß** die Gelenkachse (26) und/oder die weitere Gelenkachse (30) in einem bei geschlossenem Dach oberen Randbereich des Gelenks (18a) angeordnet ist.

7. Cabriolet-Fahrzeug nach einem der vorangehenden Ansprüche, **dadurch gekennzeichnet, daß** der Zwischenhebel (28) bezüglich einer Schwenkbewegung um die Gelenkachse (26) und/oder die weitere Gelenkachse (30) mit einem Anschlag (42, 44) zur Begrenzung des Schwenkbereichs zusammenwirkt.

8. Cabriolet-Fahrzeug nach einem der vorangehenden Ansprüche, **dadurch gekennzeichnet, daß** das erste (10a) und/oder das zweite Trägerteil (10b) gegenüber dem Zwischenhebel (28) um etwa 90° schwenkbar ist.

9. Cabriolet-Fahrzeug nach einem der vorangehenden Ansprüche, **dadurch gekennzeichnet, daß** der Zwischenhebel (28) mit mindestens einem Anschlag versehen ist, der bevorzugt als nasenförmige Verlängerung (34) des Zwischenhebels (28) ausgebildet ist.

10. Cabriolet-Fahrzeug nach einem der vorangehenden Ansprüche, **dadurch gekennzeichnet, daß** die Gelenkachsen (26, 30) durch Bolzen gebildet sind, die in Bohrungen in den Trägerteilen (10a, 10b) und dem Gelenkteil (24) aufgenommen sind.

11. Cabriolet-Fahrzeug nach einem der vorangehenden Ansprüche, **dadurch gekennzeichnet, daß** die Trägerteile (10a, 10b) zueinander um bis zu etwa 180° schwenkbar sind.

12. Cabriolet-Fahrzeug nach einem der vorangehenden Ansprüche, **dadurch gekennzeichnet, daß** das Gelenk (18a) über ein zweites Gelenkteil (32) mit dem ersten Trägerteil (10a) verbunden ist.

13. Cabriolet-Fahrzeug nach Anspruch 12, **dadurch gekennzeichnet, daß** das zweite Gelenkteil (32) schiebebeweglich in dem ersten Trägerteil (10a) aufgenommen ist.

## Claims

1. A cabriolet vehicle with a movable roof (4) which is formed in an at least sectionally flexible manner and which has a roof covering which is stretched over at least sectionally rigid beams (6, 8,10,12), whereby the beams (6,8,10,12) each have at least one hinge (18a, b, c) at which a first beam part (10a) is pivotably connected via a hinge axle (26) to a second beam part (10b), **characterised in that** at least one hinge (18a) has a hinged part (24) which bears the hinge axle (26) and which is received in a beam part (10b) in a slidingly movable manner, whereby an intermediate lever (28) is linked to the hinge axle (26), said intermediate lever being pivotably connected to the first beam part (10a) via a further hinge axle (30) and having, at its end section adjacent the first hinge axle (26), an angled projection (36) to which is attached a return spring (40) which biases the hinged part (24) into a starting position in the second beam part (10b).

2. The cabriolet vehicle according to Claim 1, **characterised in that** the hinged part (24) is slidingly movable along a longitudinal axis (20b) of the second beam part (10b).

3. The cabriolet vehicle according to Claim 1, **characterised in that** the (first) hinged part (24) is slidingly movable under an angle to a longitudinal axis (20b) of the second beam part (10b), whereby a space between the hinge axle (26) and the longitudinal axis (20b) of the second beam part (10b) is altered when the hinged part (24) is displaced.

4. The cabriolet vehicle according Claim 1, **characterised in that** the (first) hinged part (24) is displaceable along a predetermined path of movement in the second beam part (10b), whereby a space between the hinge axle (26) and a longitudinal axis (20b) of the second beam part (10b) changes in a predetermined way when the hinged part (24) is displaced.

5. The cabriolet vehicle according to one of claims 1 to 4, **characterised in that** the intermediate lever (28) is arranged inside a contour of the beam parts (10a, 10b) when the first (10a) and second beam parts (10b) are extended in an aligned manner.

6. The cabriolet vehicle according to one of the preceding claims, **characterised in that** the hinge axle (26) and/or the other hinge axle (30) is arranged in an edge area of the hinge (18a) which is an upper edge area of the hinge (18a) when the roof is closed.

7. The cabriolet vehicle according to one of the preceding claims, **characterised in that** the intermediate lever (28) co-operates with a stopper (42, 44) to limit the pivoting range with regard to a pivoting movement around the hinge axle (26) and/or the other hinge axle (30).

8. The cabriolet vehicle according to one of the preceding claims, **characterised in that** the first (10a) and/or the second beam part (10b) is pivotable by approximately 90° in relation to the intermediate lever (28).

9. The cabriolet vehicle according to one of the preceding claims, **characterised in that** the intermediate lever (28) is provided with at least one stopper which is preferably formed as a lug-shaped projection (34) of the intermediate lever (28).

10. The cabriolet vehicle according to one of the preceding claims, **characterised in that** the hinge axles (26, 30) are configured by bolts which are received in boreholes in the beam parts (10a, 10b) and the hinged part (24).

11. The cabriolet vehicle according to one of the preceding claims, **characterised in that** the beam parts (10a, 10b) can be pivoted towards each other by up to approximately 180°.

12. The cabriolet vehicle according to one of the preceding claims, **characterised in that** the hinge (18a) is connected to the first beam part (10a) via a second hinged part (32).

13. The cabriolet vehicle according to Claim 12, **characterised in that** the second hinged part (32) is received in the first beam part (10a) in a slidingly movable manner.

## Revendications

1. Véhicule cabriolet avec un toit mobile (4), lequel est formé au moins en zones flexibles et présente un revêtement de toit tendu sur des supports au moins en zones rigides (6, 8, 10, 12), les supports (6, 8, 10, 12) présentant chacun au moins une articulation (18a, b, c), à laquelle est reliée une première partie de support (10a) à une deuxième partie de support (10b) par le biais d'un axe articulé (26) de façon à pouvoir pivoter, **caractérisé en ce qu'**au moins une articulation (18a) présente une partie articulée de soutien (24) de l'axe articulé (26), laquelle est reçue de façon à pouvoir pivoter dans une partie de support (10b), un levier intermédiaire (28) étant articulé au niveau de l'axe articulé (26), lequel est relié à une première partie de support (10a) par le biais d'un axe articulé supplémentaire (30) de façon à pouvoir pivoter et lequel présente un prolongement coudé (36) au niveau de sa section finale adjacente au premier axe articulé (26), auquel est attaché un ressort de rappel (40) précontraint de la partie articulée (24) dans une position initiale dans la deuxième partie de support (10b).

2. Véhicule cabriolet selon la revendication 1, **caractérisé en ce que** la partie articulée (24) est mobile par coulissement le long d'un axe longitudinal (20b) de la deuxième partie de support (10b).

3. Véhicule cabriolet selon la revendication 1, **caractérisé en ce que** la (première) partie articulée (24) est mobile par coulissement sur un angle par rapport à un axe longitudinal (20b) de la deuxième partie de support (10b), grâce à quoi une distance entre l'axe articulé (26) et l'axe longitudinal (20b) de la deuxième partie de support (10b) varie lorsque la partie articulée (24) est déplacée.

4. Véhicule cabriolet selon la revendication 1, **caractérisé en ce que** la (première) partie articulée (24) peut être déplacée le long d'une trajectoire prédéterminée dans la deuxième partie de support (10b), grâce à quoi une distance entre l'axe articulé (26) et un axe longitudinal (20b) de la deuxième partie de support (10b) varie lorsque la partie articulée (24) est déplacée de façon prédéterminée.

5. Véhicule cabriolet selon l'une des revendications 1 à 4, **caractérisé en ce que** le levier intermédiaire (28) est arrangé à l'intérieur d'un contour des parties de support (10a, 10b), la première (10a) et la deuxième (10b) partie de support s'étendant de façon alignée.

6. Véhicule cabriolet selon l'une des revendications précédentes, **caractérisé en ce que** l'axe articulé (26) et/ou l'axe articulé supplémentaire (30) est arrangé dans une zone de bord supérieure de l'articulation (18a), le toit étant fermé.

7. Véhicule cabriolet selon l'une des revendications précédentes, **caractérisé en ce que** le levier intermédiaire (28) coopère avec une butée (42, 44) pour limiter l'étendue de pivotement relativement à un mouvement pivotant autour de l'axe articulé (26) et/ou de l'axe articulé supplémentaire (30).

8. Véhicule cabriolet selon l'une des revendications précédentes, **caractérisé en ce que** la première (10a) et/ou la deuxième partie de support (10b) peut pivoter d'environ 90° par rapport au levier intermédiaire (28).

9. Véhicule cabriolet selon l'une des revendications précédentes, **caractérisé en ce que** le levier intermédiaire (28) est pourvu d'au moins une butée, laquelle est formée de préférence comme un prolongement en forme de nez (34) du levier intermédiaire (28).

10. Véhicule cabriolet selon l'une des revendications précédentes, **caractérisé en ce que** les axes articulés (26, 30) sont construits à l'aide de boulons, lesquels sont reçus dans des alésages dans les parties de support (10a, 10b) et dans la partie articulée (24).

11. Véhicule cabriolet selon l'une des revendications précédentes, **caractérisé en ce que** les parties de support (10a, 10b) peuvent pivoter l'une par rapport à l'autre jusqu'à environ 180°.

12. Véhicule cabriolet selon l'une des revendications précédentes, **caractérisé en ce que** l'articulation (18a) est reliée à la première partie de support (10a) par le biais d'une deuxième partie articulée (32).

13. Véhicule cabriolet selon la revendication 12, **caractérisé en ce que** la deuxième partie articulée (32) est reçue de façon mobile par coulissement dans la première partie de support (10a).
